(19) Europäisches Patentamt / European Patent Office / Office européen des brevets

(11) **EP 4 654 622 A1**

(12) **EUROPEAN PATENT APPLICATION**
published in accordance with Art. 153(4) EPC

(43) Date of publication:
**26.11.2025 Bulletin 2025/48**

(51) International Patent Classification (IPC):
*H04W 4/02* (2018.01)          *H04W 4/021* (2018.01)
*H04W 4/40* (2018.01)          *H04W 64/00* (2009.01)

(21) Application number: **24822621.9**

(22) Date of filing: **06.06.2024**

(86) International application number:
**PCT/CN2024/097652**

(87) International publication number:
**WO 2024/255670 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 CN 202310723293**

(71) Applicants:
• **Zhejiang Geely Holding Group Co., Ltd.**
**Hangzhou, Zhejiang 310051 (CN)**

• **Geely Automobile Research Institute
(Ningbo) Co., Ltd.
Ningbo, Zhejiang 315336 (CN)**

(72) Inventor: **CHEN, Guoan
Hangzhou Bay New District, Ningbo, Zhejiang
315336 (CN)**

(74) Representative: **Boult Wade Tennant LLP
Salisbury Square House
8 Salisbury Square
London EC4Y 8AP (GB)**

(54) **VEHICLE KEY POSITIONING METHOD, AND APPARATUS AND STORAGE MEDIUM**

(57)     A vehicle key positioning method, an apparatus and a storage medium. The method includes: after a vehicle completes a communication connection with a key of the vehicle, determining respective distances between a plurality of positioning anchor points of the vehicle and the key based on respective ranging signals between the plurality of positioning anchor points and the key; based on the respective distances between the plurality of positioning anchor points and the key, determining at least two reference anchor points from the plurality of positioning anchor points, where a reference anchor point indicates that a ranging signal transmission mode between the reference anchor point and the key is line-of-sight (LOS) wireless transmission; based on respective distances between the determined reference anchor points and the key, determining a first coordinate of the key in a local coordinate system corresponding to the determined reference anchor points; performing coordinate system transformation processing on the first coordinate, so as to acquire a second coordinate of the key in a preset coordinate system of the vehicle; and according to the second coordinate, if it is determined that the key is in a function area of the vehicle, executing a preset operation corresponding to the function area. By means of the method, the problem of inaccurate positioning existing in key positioning methods in the prior art is solved.

FIG. 3

## Description

The present application claims priority to Chinese patent application No. 202310723293.5, filed with the China National Intellectual Property Administration on June 16, 2023 and entitled "Vehicle Key Positioning Method, Apparatus and Storage Medium", which is hereby incorporated by reference in its entirety.

## TECHNICAL FIELD

The present application relates to the field of communication technology and, in particular, to a vehicle key positioning method, an apparatus and a storage medium.

## BACKGROUND

Senseless control technology such as Passive Entry Passive Start (Passive Entry Passive Start, PEPS) enables a user to control a vehicle in a senseless manner before entering the vehicle, thus improving the user experience of the vehicle.

The specific process of the user's senseless control for a vehicle is as follows: when a key of the vehicle carried by the user is within a preset distance range outside a vehicle body of the vehicle, the key establishes communication with the vehicle; a vehicle body control module (Body Control Module, BCM) of the vehicle positions the key and obtains position information of the key relative to the vehicle; based on the position information of the key relative to the vehicle, the BCM determines whether the key is in a function area of the vehicle; if it is determined that the key is in a certain function area of the vehicle, the BCM executes a preset operation corresponding to the function area where the key is located. In the prior art, the method for positioning a key by the BCM is mainly as follows: the BCM performs position calculation on distance information between the key and all positioning anchor points of the vehicle obtained by the BCM by using the least squares method, so as to obtain position information of the key relative to the vehicle.

In the key positioning method in the prior art, there is a problem of inaccurate positioning, which affects the user experience of the vehicle.

## SUMMARY

The present application provides a vehicle key positioning method, an apparatus and a storage medium, so as to solve the problem of inaccurate positioning in the key positioning method in the prior art.

In a first aspect, the present application provides a vehicle key positioning method, including:

after a vehicle completes a communication connection with a key of the vehicle, determining respective distances between a plurality of positioning anchor points of the vehicle and the key based on respective ranging signals between the plurality of positioning anchor points and the key;

determining at least two reference anchor points from the plurality of positioning anchor points, based on the respective distances between the plurality of positioning anchor points and the key; where a reference anchor point indicates that a ranging signal transmission mode between the reference anchor point and the key is line-of-sight wireless transmission LOS;

determining a first coordinate of the key in a local coordinate system corresponding to the determined reference anchor points, based on respective distances between the determined reference anchor points and the key;

performing a coordinate system transformation processing on the first coordinate to obtain a second coordinate of the key in a preset coordinate system of the vehicle;

if it is determined according to the second coordinate that the key is in a function area of the vehicle, executing a preset operation corresponding to the function area.

Optionally, the determining the first coordinate of the key in the local coordinate system corresponding to the determined reference anchor points, based on the respective distances between the determined reference anchor points and the key includes:

determining, from the determined reference anchor points, two reference anchor points as target reference anchor points;

determining the local coordinate system with a line connecting the two target reference anchor points as an X-axis and one target reference anchor point on the X-axis as a coordinate origin;

determining, based on respective distances between the two target reference anchor points and the key, and a distance between the two target reference anchor points, the first coordinate of the key in the local coordinate system.

Optionally, the determining, from the determined reference anchor points, two reference anchor points as the target reference anchor points includes:

if a number of the determined reference anchor points exceeds two and the determined reference anchor points are collinear, determining two reference anchor points with a largest distance therebetween as the target reference anchor points;

if the number of the determined reference anchor points exceeds two and the determined reference anchor points are not collinear, determining two adjacent reference anchor points, for which a line connecting them is parallel to a ground surface, as the target reference anchor points.

Optionally, the performing the coordinate system transformation processing on the first coordinate to obtain the second coordinate of the key in the preset coordinate system of the vehicle includes:

determining a coordinate transformation coefficient $\theta$ corresponding to the coordinate origin of the local coordinate system to which the first coordinate $(x_l, y_l)$ belongs;
transforming the first coordinate $(x_l, y_l)$ into a rotation coordinate $(x_r, y_r)$ using a transformation matrix

$$\begin{bmatrix} x_r \\ y_r \end{bmatrix} = \begin{bmatrix} cos\theta & -sin\theta \\ sin\theta & cos\theta \end{bmatrix} \begin{bmatrix} x_l \\ y_l \end{bmatrix};$$

determining a second coordinate $(x_g, y_g)$ of the key in the preset coordinate system of the vehicle, based on a global coordinate $(x_0, y_0)$ of a positioning anchor point, to which the coordinate origin in the local coordinate system corresponds, in the preset coordinate system of the vehicle, using formulas $x_g = x_r + x_0$ and $y_g = y_r + y_0$.

Optionally, the positioning anchor points are positioning anchor points located outside a vehicle body; then, the determining the at least two reference anchor points from the plurality of positioning anchor points based on the respective distances between the plurality of positioning anchor points and the key includes:

sorting the respective distances between the plurality of positioning anchor points and the key in ascending order to obtain a distance sequence;
determining positioning anchor points corresponding to first n distances in the distance sequence as the reference anchor points;
where, $n \geq 2$.

Optionally, the determining the at least two reference anchor points from the plurality of positioning anchor points based on the respective distances between the plurality of positioning anchor points and the key includes:

obtaining respective received signal strength indications RSSIs corresponding to the plurality of positioning anchor points from the key; and/or obtaining respective state identifiers of corresponding positioning anchor points from positioning apparatuses of the plurality of positioning anchor points; where a state identifier is an identifier indicating whether a ranging signal used for ranging between the positioning anchor point and the key is valid;
determining a distance corresponding to an RSSI greater than a signal strength threshold as a valid distance from the respective distances between the plurality of positioning anchor points and the key; and/or determining a distance between a positioning anchor point corresponding to a valid identifier and the key as a valid distance from the state identifiers of the plurality of positioning anchor points obtained; determining the at least two reference anchor points from the plurality of positioning anchor points, based on the determined valid distance.

Optionally, before the determining the at least two reference anchor points from the plurality of positioning anchor points based on the determined valid distance, the method further includes:
if a number of the determined valid distance is less than two, re-acquiring respective ranging signals between the plurality of positioning anchor points of the vehicle and the key, and determining respective distances between the plurality of positioning anchor points and the key based on the acquired ranging signals, until that at least two valid distances are determined from the respective distances between the plurality of positioning anchor points and the key.

In a second aspect, the present application provides a control apparatus, including: a collection module, a processing module and an operation module;

the collection module is configured to after a vehicle completes a communication connection with a key of the vehicle, determine respective distances between a plurality of positioning anchor points of the vehicle and the key, based on respective ranging signals between the plurality of positioning anchor points and the key;
the processing module is configured to determine at least two reference anchor points from the plurality of positioning anchor points, based on the respective distances between the plurality of positioning anchor points and the key; where a reference anchor point indicates that a ranging signal transmission mode between the reference anchor point and the key is line-of-sight wireless transmission LOS;
the processing module is further configured to determine a first coordinate of the key in a local coordinate system corresponding to the determined reference anchor points, based on respective distances between the determined reference anchor points and the key;
the processing module is further configured to perform a coordinate system transformation processing on the first coordinate to obtain a second coordinate of the key in a preset coordinate system of the vehicle;
the operation module is configured to execute a preset operation corresponding to a function area of the vehicle if it is determined that the key is in the function area according to the second coordinate.

In a third aspect, the present application provides a control apparatus, including:

> a processor and a memory;
> where the memory stores executable instructions executable by the processor; and
> the processor executes the executable instructions stored in the memory, so that the processor executes the method as described above.

In a fourth aspect, the present application provides a storage medium, where the storage medium stores computer-executable instructions, and the computer-executable instructions, when executed by a processor, are used to implement the method described above.

In a fifth aspect, the present application provides a chip, including a memory and a processor, where the memory stores codes and data, the memory is coupled to the processor, and the processor runs a program in the memory so that the chip is used to execute the method as described above.

In a sixth aspect, the present application provides a program product, including a computer program, which, when run on a computer, causes the computer to execute the method as described above.

In a seventh aspect, the present application provides a computer program, which, when executed by a processor, is used to execute the method as described above.

According to the vehicle key positioning method, the apparatus and the storage medium provided by the present application, based on a distance between a reference anchor point, which indicates that a ranging signal transmission mode between the positioning anchor point and a key is LOS transmission, and a key, a first coordinate of the key in a local coordinate system corresponding to the reference anchor point is determined. That is, a position of the key relative to the reference anchor point is determined, ensuring the accuracy of the determined key position. Then, a coordinate system transformation processing is performed on the first coordinate, so as to obtain a second coordinate of the key in a preset coordinate system of the vehicle, and if it is determined according to the second coordinate that the key is in a function area of the vehicle, a preset operation corresponding to the function area is executed. The method of the present application avoids the inaccurate distance information determined by a ranging signal of NLOS transmission, which has an adverse effect on the positioning accuracy of the key, and improves the positioning accuracy of the key. The present application solves the problem of inaccurate positioning existing in the key positioning method in the prior art.

**BRIEF DESCRIPTION OF DRAWINGS**

The accompanying drawings, which are incorporated in and constitute a part of this specification, illustrate embodiments consistent with the present application and, together with the description, serve to explain the principles of the present application.

FIG. 1a is a diagram of an existing key positioning scenario.
FIG. 1b is a diagram of an existing ranging signal transmission scenario between a key and a vehicle positioning anchor point.
FIG. 2 is a diagram of a vehicle key positioning scenario provided by an embodiment of the present application.
FIG. 3 is a flow chart of vehicle key positioning provided by an embodiment of the present application.
FIG. 4 is a scenario diagram of a user opening a vehicle rearview mirror using senseless control provided by an embodiment of the present application.
FIG. 5 is a schematic diagram of a local coordinate system provided by an embodiment of the present application.
FIG. 6 is a schematic diagram of a preset coordinate system of a vehicle provided by an embodiment of the present application.
FIG. 7 is a first structural diagram of a control apparatus provided by an embodiment of the present application.
FIG. 8 is a second structural diagram of a control apparatus provided by an embodiment of the present application.

The above drawings have shown clear embodiments of the present application, which will be described in more detail later. These drawings and text descriptions are not intended to limit the scope of the present application in any way, but to illustrate the concept of the present application to those skilled in the art by referring to specific embodiments.

**DESCRIPTION OF EMBODIMENTS**

In order to make the purpose, technical solution and advantages of the embodiments of the present application clearer, the technical solution in embodiments of the present application will be clearly and completely described below with reference to the drawings in the embodiments of the present application. Obviously, the described embodiments are part of the embodiments of the present invention, not all of the embodiments. Based on the embodiments in the present application, all other embodiments obtained by those skilled in the art without creative work are within the protection scope of the present application.

Senseless control technology such as Passive Entry Passive Start (PEPS) enables a key-free control (or senseless control) for a vehicle before a user enters the vehicle, greatly improving the user experience of the vehicle.

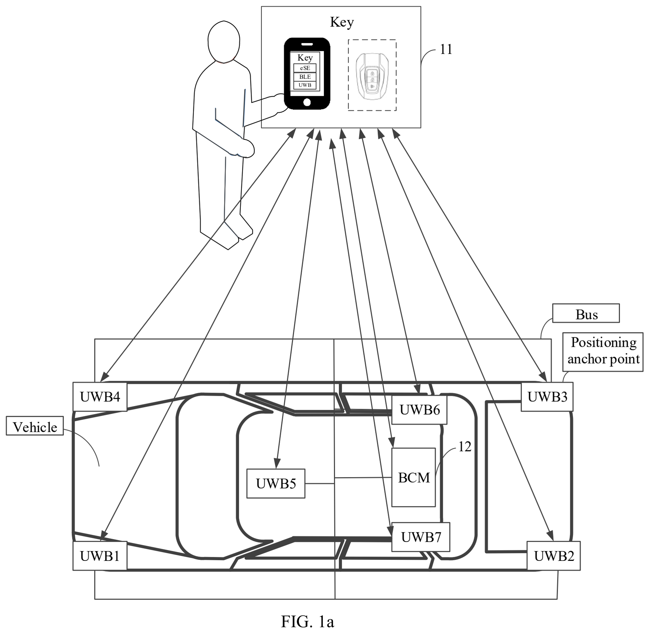

FIG. 1a is a diagram of an existing key positioning scenario. As shown in FIG. 1a, typically, positioning anchor points are deployed on a vehicle, and the positioning anchor points on the vehicle are, for example, UWB anchor points such as UWB1, UWB2, UWB3, UWB4, UWB5, UWB6, and UWB7 etc., as shown in FIG. 1a. As shown in FIG. 1a, UWB1, UWB2, UWB3, and UWB4 are all positioned outside a vehicle body, and UWB5, UWB6, and UWB7 are all positioned inside the vehicle body. A vehicle body controller (Body Control Module, referred to as BCM) 12 is also deployed on the vehicle. The BCM 12 continuously broadcasts BLE broadcast signals through a Bluetooth (Bluetooth Low Energy, referred to as BLE) module on the BCM 12. A key 11 of the vehicle detects the BLE broadcast signal of the vehicle in real time.

The specific process of a user's senseless control for the vehicle is as follows: if the key 11 detects and identifies that a received signal strength indication (Received Signal Strength Indication, RSSI) of a BLE broadcast signal of an associated vehicle reaches a preset communication threshold, the key 11 sends a communication connection request to the BCM 12 of the associated vehicle; then, the BCM 12 responds to the communication connection request sent by the key 11, and establishes communication with the key 11 after successful authentication, so as to complete a communication connection between the vehicle and the corresponding key 11; then, the BCM 12 uses the BLE RSSI between the BCM 12 and the key 11 as a ranging signal to continuously measure a distance from the key 11, to obtain a Bluetooth ranging distance of the key 11 relative to the vehicle; if the Bluetooth ranging distance is less than or equal to a first distance threshold, the BCM 12 controls positioning apparatuses at a plurality of positioning anchor points of the vehicle to initiate a ranging function of each positioning apparatus, and convert a Bluetooth ranging mode to an ultra-wideband (Ultra Wide Band, referred to as: UWB) ToF (Time of Flight) ranging mode of the positioning apparatus. The positioning apparatus may be, for example, such as a UWB apparatus including a UWB chip or a UWB module. The positioning apparatus and the BCM 12 may be connected via a bus.

The key 11 of the vehicle may be a physical key or a virtual key on a user terminal.

After the BCM 12 converts the Bluetooth RSSI ranging mode into the UWB ToF ranging mode, the BCM 12 positions the key 11 as follows: the BCM 12 determines distance information between each positioning anchor point corresponding to each positioning apparatus and the key 11 based on a ranging signal between each positioning apparatus and the key 11; then, the BCM 12 uses the least square method to perform a position calculation on the plurality of determined distance information to obtain position information of the key 11 relative to the vehicle to position the key 11, where the position information of the key 11 relative to the vehicle may be a coordinate of the key 11 in a preset coordinate system of the vehicle; then, the BCM 12 determines whether the key 11 is in a function area of the vehicle based on the position information of the key 11 relative to the vehicle; if it is determined that the key 11 is in the function area of the vehicle, the BCM 12 executes a preset operation corresponding to the function area where the key 11 is located; if it is determined that the key 11 is not in the function area of the vehicle, the preset operation corresponding to the function area will not be executed.

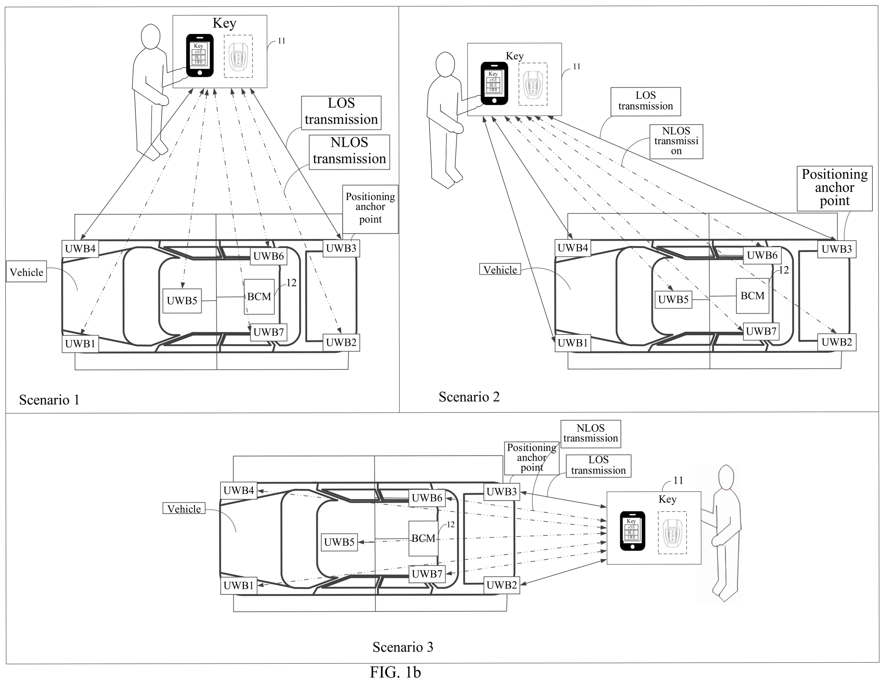

As shown in FIG. 1b, a key 11 is in the vicinity outside a vehicle body, and a transmission mode of a ranging signal between the key 11 and the positioning anchor point outside the vehicle body includes a Line of Sight wireless transmission (Line of Sight, referred to as LOS) and a Non-Line of Sight wireless transmission (Non-Line of Sight, referred to as NLOS). Due to the obstruction of the vehicle body, there is no direct path for a ranging signal between the key 11 and the positioning anchor point inside the vehicle body, so that the transmission mode of the ranging signal is NLOS transmission. The NLOS transmission of the ranging signal between the key 11 and the positioning anchor point indicates that the ranging signal is reflected and/or diffracted by a reflector during a transmission between the key 11 and the positioning anchor point, and the transmission of the ranging signal does not meet a line of sight condition and there is thus no direct path. The reflector may be, for example, a metal or non-metal vehicle body. The ranging signal is reflected and/or diffracted by the reflector, and the RSSI of the ranging signal will also be weakened due to factors such as surface conductivity, roughness, and reflectivity of the reflector. After the ranging signal is reflected and/or diffracted by the reflector during the transmission, a distance between the key 11 and the positioning anchor point determined based on the ranging signal is often greater than an actual distance between the key 11 and the positioning anchor point. Therefore, the distance information between the key 11 and all the positioning anchor points of the vehicle contains inaccurate distance information.

In the present application, NLOS is also referred to as NLOS transmission, and LOS is also referred to as LOS transmission.

Since the accuracy of the least squares calculation is closely related to the amount of data used for the calculation and the accuracy of the data, in order to ensure the amount of data used for the least squares calculation, in the existing key positioning method distance information between the key 11 and all positioning anchor points is used to calculate the position of the key 11, resulting in a large deviation between the obtained position information of the key 11 relative to the vehicle and an actual position of the key 11 relative to the vehicle, which leads to the problem of inaccurate positioning in the key positioning method in the prior art, which in turn causes a key position calculated by the vehicle to be inconsistent with an actual position of the key, triggering an execution of a preset operation of a function area that does not match the actual position, or causes a situation where the key is located in a function area of the vehicle, but a preset operation of the function area where the key is located cannot be executed, affecting the user experience of the vehicle.

Typically, as shown in FIG. 1b, the key 11 is outside the vehicle body, and a transmission of a ranging signal between the key 11 and at least two positioning anchor points on the vehicle is not subject to reflection or diffraction by the vehicle body, or, a transmission mode of the ranging signal between the key 11 and at least two positioning anchor points on the vehicle is LOS transmission. The LOS transmission is as shown in scenario 1, scenario 2, and scenario 3 of FIG. 1b. If a positioning anchor point corresponding to the LOS transmission is used as a reference anchor point to position the key 11, the positioning accuracy of the key 11 can be improved, and, at the same time, an adverse effect of inaccurate distance information determined based on a ranging signal of NLOS transmission on the positioning accuracy of the key 11 can be eliminated.

In this regard, the present application proposes a vehicle key positioning method: after a vehicle completes a communication connection with a key of the vehicle, determining respective distances between a plurality of positioning anchor points of the vehicle and the key based on respective ranging signals between the plurality of positioning anchor points and the key; determining at least two reference anchor points from the plurality of positioning anchor points based on the respective distances between the plurality of positioning anchor points and the key; determining a first coordinate of the key in a local coordinate system corresponding to the determined reference anchor points based on the respective distances between the determined reference anchor points and the key, where the reference anchor point indicates that a transmission mode of the ranging signal between the reference anchor point and the key is line-of-sight wireless transmission LOS; performing a coordinate system transformation processing on the first coordinate to obtain a second coordinate of the key in a preset coordinate system of the vehicle; and according to the second coordinate, if it is determined that the key is in a function area of the vehicle, executing a preset operation corresponding to the function area. According to the vehicle key positioning method provided by the present application, based on a distance between a reference anchor point, which indicates that a ranging signal transmission mode between the positioning anchor point and a key is LOS transmission, and a key, a first coordinate of the key in a local coordinate system corresponding to the reference anchor point is determined. That is, a position of the key relative to the reference anchor point is determined, ensuring the accuracy of the determined key position. Then, a coordinate system transformation processing is performed on the first coordinate to obtain a second coordinate of the key in a preset coordinate system of the vehicle; if it is determined according to the second coordinate that the key is in a function area of the vehicle, a preset operation corresponding to the function area is executed. The method of the present application avoids the inaccurate distance information determined by the ranging signal of NLOS transmission, which has an adverse effect on the positioning accuracy of the key, improves the positioning accuracy of the key, and solves the problem of inaccurate positioning in the key positioning method in the prior art.

The vehicle key positioning method provided by the present application is described below with reference to some embodiments.

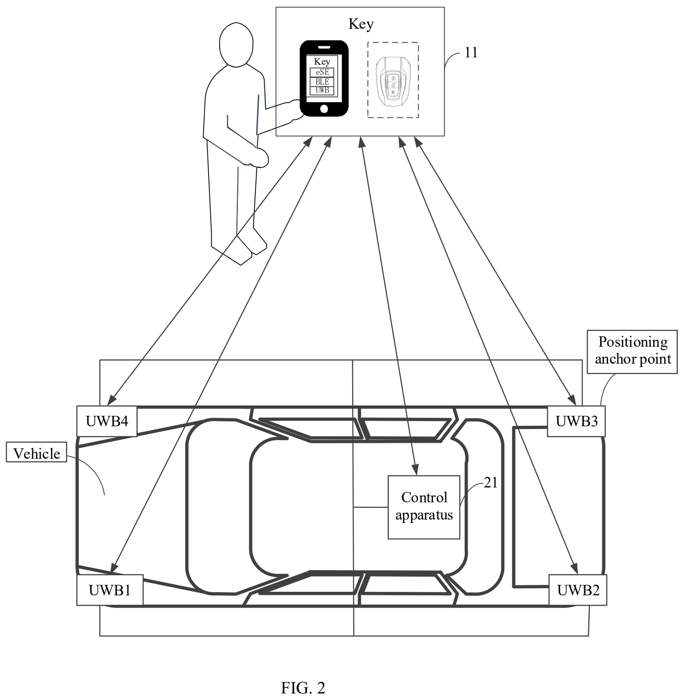

FIG. 2 is a diagram of a vehicle key positioning scenario provided by an embodiment of the present application. As shown in FIG. 2, a plurality of positioning anchor points are provided on the vehicle, and the positioning anchor points are UWB1, UWB2, UWB3, and UWB4, as illustrated in FIG. 2. Positioning apparatuses are deployed on the positioning anchor points, and the positioning apparatus can determine a distance between the positioning anchor point and the key 11, or, the positioning anchor point is an anchor point with a positioning function. The positioning apparatus can be a UWB apparatus including a UWB chip or a UWB module. The positioning apparatus can also be a positioning apparatus including a BLE module or a BLE chip. A control apparatus 21 is deployed on the vehicle, and the control apparatus 21 includes a BLE module. The key 11 of the vehicle also includes a UWB chip or a UWB module. The key 11 of the vehicle also includes a BLE module or a BLE chip. The key 11 of the vehicle can be a physical key or a virtual key on a user terminal. The user terminal can be a terminal such as a mobile phone or a tablet computer.

Typically, the control apparatus 21 continuously broadcasts BLE broadcast signals through the BLE module. The key 11 of the vehicle detects the BLE broadcast signal of the vehicle in real time.

If the key 11 detects and identifies that an RSSI of the BLE broadcast signal of the vehicle reaches a preset communication threshold, the key 11 sends a communication connection request to the control apparatus 21 of the vehicle. The control apparatus 21 responds to the communication connection request sent by the key 11, and establishes communication with the key 11 after successful authentication, so as to complete a communication connection between the vehicle and the key 11. The control apparatus 21 continuously measures a distance from the key 11 based on a BLE ranging signal between the control apparatus 21 and the key 11, to obtain a Bluetooth ranging distance of the key 11 relative to the vehicle. If the Bluetooth ranging distance is less than or equal to a first distance threshold, the control apparatus 21 controls positioning apparatuses at a plurality of positioning anchor points of the vehicle, and initiates a ranging function of each positioning apparatus. If the positioning apparatus is a UWB apparatus, the control apparatus 21 converts a Bluetooth ranging mode used for ranging by the control apparatus 21 to a UWB ranging mode used for ranging by the positioning apparatus. The ranging signal between the positioning apparatus and the key 11 is a ranging signal between the positioning anchor point corresponding to the positioning apparatus and the key 11.

After the control apparatus 21 converts the Bluetooth ranging mode into the UWB ranging mode, the control apparatus 21 positions the key 11 in the following manner: the control apparatus 21 determines respective distances between a plurality of positioning anchor points of the vehicle and the key 11 based on respective ranging signals between the plurality of positioning anchor points and the key 11; then, the control apparatus 21 determines at least two reference anchor points from the plurality of positioning anchor points based on the respective distances between the plurality of positioning anchor points and the key 11; and determines a first coordinate of the key 11 in a local coordinate system corresponding to the determined reference anchor points based on the respective distances between the determined reference anchor points and the key 11, where the reference anchor point indicates that a ranging signal transmission mode between the reference anchor point and the key 11 is a line-of-sight wireless transmission (LOS); then, the control apparatus 21 performs a coordinate system transformation processing on the first coordinate to obtain a second coordinate of the key 11 in a preset coordinate system of the vehicle; according to the second coordinate, if it is determined that the key 11 is in a function area of the vehicle, the control apparatus 21 executes a preset operation corresponding to the function area; if it is determined that the key 11 is not in the function area of the vehicle, the preset operation corresponding to the function area will not be executed.

Typically, a vehicle is preset with multiple function areas. The preset operations corresponding to each function area include at least one of the following operations: Passive Entry (Passive Entry), Passive Start (Passive Start), turning on the welcome light, opening the left and right doors, seat adjustment, turning on the air conditioner, locking, turning off the engine, turning off the lights, closing the doors, turning off the air conditioner, etc.

As shown in FIG. 2, the positioning anchor points UWB1, UWB2, UWB3, and UWB4 are all located outside a vehicle body, and UWB1 and UWB4 are located at two corners of a front portion of the vehicle, and UWB2 and UWB3 are located at two corners of a rear portion of the vehicle. The positioning anchor points are located outside the vehicle body and at the four corners of the front portion and rear portion of the vehicle, ensuring that the ranging signals between the key 11 and the positioning anchor points are not blocked by the vehicle body, or are not reflected or diffracted by the vehicle body.

Optionally, the positioning apparatus may also be a Bluetooth positioning apparatus. After a ranging function of the Bluetooth positioning apparatus is activated, the control apparatus 21 positions the key 11 in the following manner: the control apparatus 21 determines respective distances between a plurality of positioning anchor points of the vehicle and the key 11 based on ranging signals (such as Bluetooth ranging signal) between Bluetooth positioning apparatuses of the plurality of positioning anchor points and the key 11; then, the control apparatus 21 determines at least two reference anchor points from the plurality of positioning anchor points based on the respective distances between the plurality of positioning anchor points and the key 11, and determines a first coordinate of the key 11 in a local coordinate system corresponding to the determined reference anchor points based on the respective distances between the determined reference anchor points and the key 11; then, the control apparatus 21 performs a coordinate system transformation processing on the first coordinate to obtain a second coordinate of the key 11 in a preset coordinate system of the vehicle; based on the second coordinate, if it is determined that the key 11 is in a function area of the vehicle, the control apparatus 21 executes a preset operation corresponding to the function area; if it is determined that the key 11 is not in the function area of the vehicle, the preset operation corresponding to the function area will not be executed.

Typically, in terms of short-range ranging, the accuracy of UWB ranging is higher than that of Bluetooth ranging. Therefore, the positioning apparatus may preferably be a UWB apparatus using the UWB ranging mode.

In the vehicle key positioning method provided by the present embodiment, at least two reference anchor points are determined from a plurality of positioning anchor points, and a first coordinate of the key in a local coordinate system corresponding to the reference anchor points is determined based on respective distances between the determined reference anchor points and the key, so as to accurately determine a position of the key relative to the reference anchor points, thereby ensuring the accuracy of the determined key position; then, a coordinate system transformation processing is performed on the first coordinate to obtain a second coordinate of the key in a preset coordinate system of the vehicle; if it is determined that the key is in a function area of the vehicle according to the second coordinate, a preset operation corresponding to the function area where the key is located is executed; and if it is determined that the key is not in a function area of the vehicle, the preset operation corresponding to the function area will not be executed. The method of the present application avoids the inaccurate distance information determined by the ranging signal of NLOS transmission, which has an adverse effect on the positioning accuracy of the key, improves the positioning accuracy of the key, and solves the problem of inaccurate positioning in the key positioning method in the prior art. The method of the present application can also avoid a situation where the key position calculated by the existing key positioning method of the vehicle is inconsistent with an actual position of the key, resulting in triggering an execution of a preset operation of a function area that is inconsistent with the actual position; or avoid a situation where the key is located in a function area of the vehicle, but a preset operation of the function area where the key is located cannot be executed. The method provided by the present application improves the user experience of the vehicle.

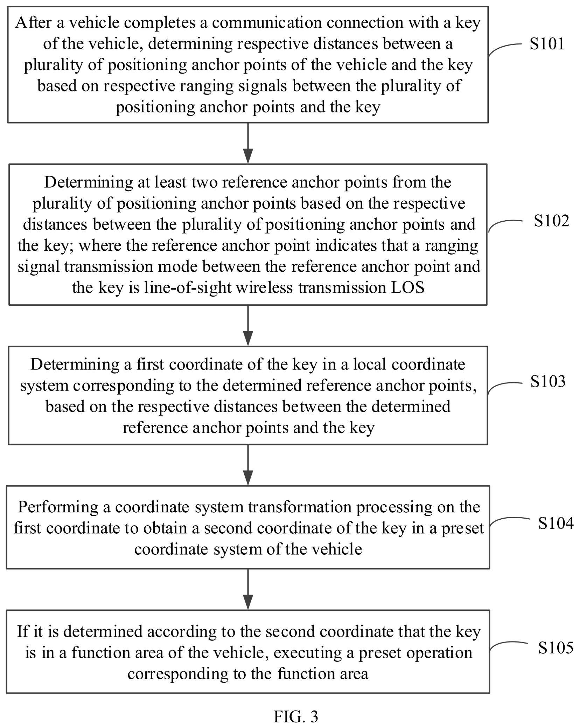

The vehicle key positioning method provided by the present application is described in detail below with reference to FIG. 2 and FIG. 3. FIG. 3 is a flow chart of vehicle key positioning provided by an embodiment of the present application. The execution entity of the embodiment shown in FIG. 3 may be the control apparatus 21 in the embodiment shown in FIG. 2. As shown in FIG. 3, the method includes:

S101, after a vehicle completes a communication connection with a key of the vehicle, determining respective distances between a plurality of positioning anchor points of the vehicle and the key based on respective ranging signals between the plurality of positioning anchor points and the key.

In the present embodiment, after the vehicle and the key 11 of the vehicle get connected in communication and the positioning apparatuses on the plurality of positioning anchor points on the vehicle start ranging operation, the control apparatus 21 obtains the respective ranging signals between the plurality of positioning anchor points of the vehicle and the key 11. The control apparatus 21 determines the respective distances between the plurality of positioning anchor points of the vehicle and the key 11 based on the respective ranging signals between the plurality of positioning anchor points and the key 11.

Optionally, the positioning anchor point is a positioning anchor point located outside the vehicle body. For example, the positioning anchor point may be a positioning anchor point located at the four corners of the front portion and rear portion of the vehicle, or may be a positioning anchor point located at other positions outside the vehicle body. The distance between the positioning anchor point and the key 11, which is determined by the control apparatus 21, may be a time of flight (Time of flight, referred to as ToF) distance.

S102, determining at least two reference anchor points from the plurality of positioning anchor points based on the respective distances between the plurality of positioning anchor points and the key; where, the reference anchor point indicates that a ranging signal transmission mode between the reference anchor point and the key is line-of-sight wireless transmission LOS.

In the present embodiment, the control apparatus 21 can determine at least two positioning anchor points whose ranging signal transmission mode is LOS from the plurality of positioning anchor points as reference anchor points based on the respective distances between the plurality of positioning anchor points and the key 11.

Exemplarily, the control apparatus 21 may determine at least two reference anchor points from the plurality of positioning anchor points based on the respective distances between the plurality of positioning anchor points and the key 11 in the following manner: the control apparatus 21 sorts the respective distances between the plurality of positioning anchor points and the key 11 in ascending order to obtain a distance sequence. The control apparatus 21 determines positioning anchor points corresponding to first $n$ distances in the distance sequence as reference anchor points, where $n \geq 2$, and $n$ may be the number of preset reference anchor points.

Optionally, the control apparatus 21 may also determine positioning anchor points corresponding to first $n$ distances in the distance sequence that are smaller than a second distance threshold as the reference anchor points. The second distance threshold may be a maximum distance between the key 11 and the vehicle when the key 11 is located in the function area.

If a ranging signal between the positioning anchor point and the key 11 is reflected or diffracted by the vehicle body, the distance between the positioning anchor point and the key 11 determined based on the ranging signal will become larger. Therefore, determining the positioning anchor point with a small distance from the distance sequence as the reference anchor point can ensure the accuracy and effectiveness of the determined reference anchor point, thereby ensuring the accuracy of the position of the key 11 determined based on the reference anchor point.

Optionally, the control apparatus 21 may also determine at least two reference anchor points from the plurality of positioning anchor points based on the respective distances between the plurality of positioning anchor points and the key 11 in the following manner as shown in steps I-III.

Step I, the control apparatus 21 obtains respective received signal strength indications (RSSIs) corresponding to the plurality of positioning anchor points from the key 11; and/or obtains respective state identifiers of corresponding positioning anchor points from positioning apparatuses of the plurality of positioning anchor points. The state identifier is an identifier that indicates whether a ranging signal used for ranging between the positioning anchor point and the key is valid. That is, the state identifier is a valid identifier that indicates that a ranging signal used for ranging between the positioning anchor point and the key is valid, or an invalid identifier that indicates that a ranging signal used for ranging between the positioning anchor point and the key is invalid. The valid identifier is such as 1 or *valid,* and the invalid identifier is such as 0 or *invalid.*

Step II, the control apparatus 21 determines, from the respective distances between the plurality of positioning anchor points and the key 11, a distance corresponding to an RSSI greater than a signal strength threshold as a valid distance; and/or determines, from the respective state identifiers of the plurality of positioning anchor points obtained, a distance between a positioning anchor point corresponding to a valid identifier and the key as a valid distance.

Step III, the control apparatus 21 determines at least two reference anchor points from the plurality of positioning anchor points based on the determined valid distance.

Furthermore, before the control apparatus 21 determines at least two reference anchor points from the plurality of positioning anchor points based on the determined valid distance, if the number of the valid distances determined by the control apparatus 21 is less than two, the control apparatus 21 re-acquires respective ranging signals between the plurality of positioning anchor points of the vehicle and the key 11, and determines respective distances between the plurality of positioning anchor points and the key 11 based on the acquired ranging signals, until that at least two valid distances are determined from the respective distances between the plurality of positioning anchor points and the key 11, so as to improve the accuracy of subsequent positioning of the key 11.

The control apparatus 11 determines the valid distance from the respective distances between the plurality of positioning anchor points and the key 11 based on the RSSI and/or the state identifier of the positioning anchor point, and then determines the reference anchor point based on the valid distance, thereby improving the accuracy of determining the reference anchor point and ensuring the validity of the determined reference anchor point.

S103, determining a first coordinate of the key in a local coordinate system corresponding to the determined reference anchor points, based on the respective distances between the determined reference anchor points and the key.

In the present embodiment, based on the respective distances between the determined reference anchor points and the key, the control apparatus 21 can determine the first coordinate of the key 11 in the local coordinate system corresponding to the determined reference anchor points in the manner shown in steps IV-VI below:

Step IV: the control apparatus 21 determines two reference anchor points as target reference anchor points from the determined reference anchor points.

Exemplarily, if the number of the reference anchor points determined by the control apparatus 21 exceeds two and the determined reference anchor points are collinear, the control apparatus 21 determines two reference anchor points with the largest distance therebetween as the target reference anchor points.

If the number of the reference anchor points determined by the control apparatus 21 exceeds two and the determined reference anchor points are not collinear, two adjacent reference anchor points, for which a line connecting them is parallel to a ground surface, are determined as the target reference anchor points. Further, if the control apparatus 21 determines that there are multiple groups of two adjacent reference anchor points satisfying that the line connecting the two adjacent reference anchor points are parallel to the ground surface, two adjacent reference anchor points for which the line connecting them is parallel to the ground surface and which are least affected by the vehicle body are selected as the target reference anchor points according to a preset rule.

If the number of the reference anchor points determined by the control apparatus 21 exceeds two and the determined reference anchor points are not collinear, the control apparatus 21 determines two adjacent reference anchor points whose sum of distances from the key 11 is the smallest as the target reference anchor points.

Step V, the control apparatus 21 determines the local coordinate system with a line connecting two target reference anchor points as an X-axis and one target reference anchor point on the X-axis as a coordinate origin.

Step VI, the control apparatus 21 determines a first coordinate of the key 11 in the local coordinate system based on respective distances between the two target reference anchor points and the key 11, and a distance between the two target reference anchor points.

Optionally, if the key 11 is not colinear with the reference anchor points, on the same vehicle, the local coordinate system determined by the control apparatus 21 may be a local coordinate system in which a Y-axis coordinate value of the key 11 is a negative number.

Optionally, if the key 11 is not collinear with the reference anchor points, on the same vehicle, the local coordinate system determined by the control apparatus 21 may also be a local coordinate system in which a Y-axis coordinate value of the key 11 is a positive number.

The first coordinate of the key 11 represents the position of the key 11 relative to the determined reference anchor points. The control apparatus 21 determines at least two positioning anchor points whose ranging signal transmission mode is LOS from the plurality of positioning anchor points as reference anchor points, and accurately determines the position of the key 11 relative to the reference anchor points based on the respective distances between the reference anchor points and the key 11, thereby ensuring the accuracy of the determined position of the key 11.

Typically, a vehicle is preset with multiple function areas, and each function area corresponds to a preset operation, so that when it is determined that a user is carrying the key 11 in a certain function area, the preset operation corresponding to the function area is executed, so that the user can realize senseless control of the vehicle.

In order to determine whether the key 11 is in the function area of the vehicle, a coordinate of the key 11 in a preset coordinate system of the vehicle are usually used for judgment. Each function area of the vehicle is associated with the preset coordinate system of the vehicle. Based on the first coordinate of the key 11 in the local coordinate system, the control apparatus 21 can accurately determine a coordinate of the key 11 in the preset coordinate system of the vehicle, and then accurately determine whether the key 11 is in the function area of the vehicle. Therefore, after executing step S103, the control apparatus 21 executes step S104 to accurately determine the coordinate of the key 11 in the preset coordinate system of the vehicle.

S104, performing a coordinate system transformation processing on the first coordinate to obtain a second coordinate of the key in a preset coordinate system of the vehicle.

In the present embodiment, based on the first coordinate of the key 11 that has been accurately determined, the control apparatus 21 performs a coordinate system transformation processing from the local coordinate system to the preset coordinate system for the first coordinate, so that a second coordinate of the key 11 in the preset coordinate system of the vehicle can be accurately obtained. The second coordinate is used to determine whether the key 11 is within the function area of the vehicle.

Exemplarily, the control apparatus 21 determines a coordinate transformation coefficient $\theta$ corresponding to the coordinate origin of the local coordinate system to which the first coordinate $(x_l, y_l)$ belongs.

The control apparatus 21 uses a transformation matrix $\begin{bmatrix} x_r \\ y_r \end{bmatrix} = \begin{bmatrix} cos\theta & -sin\theta \\ sin\theta & cos\theta \end{bmatrix} \begin{bmatrix} x_l \\ y_l \end{bmatrix}$ to transform the first coordinate $(x_l, y_l)$ into a rotation coordinate $(x_r, y_r)$.

Based on a global coordinate $(x_0, y_0)$ in a preset coordinate system of the vehicle of a positioning anchor point, which corresponds to the coordinate origin of the local coordinate system, the control apparatus 21 determines the second coordinate $(x_g, y_g)$ of the key 11 in the preset coordinate system of the vehicle, using the formulas $x_g = x_r + x_0$ and $y_g = y_r + y_0$.

In step S104, a conversion from the coordinate of the key 11 in the local coordinate system to the coordinate of the key 11 in the preset coordinate system is achieved, to obtain the second coordinate that can be used to determine whether the key 11 is within the function area of the vehicle.

S105, if it is determined according to the second coordinate that the key is in a function area of the vehicle, executing a preset operation corresponding to the function area.

In the present embodiment, based on the second coordinate, if it is determined that the key 11 is in the function area of the vehicle, the control apparatus 21 executes a preset operation corresponding to the function area where the key 11 is located.

Correspondingly, if the control apparatus 21 determines, based on the second coordinate, that the key 11 is not in the function area of the vehicle, the preset operation corresponding to the function area will not be executed.

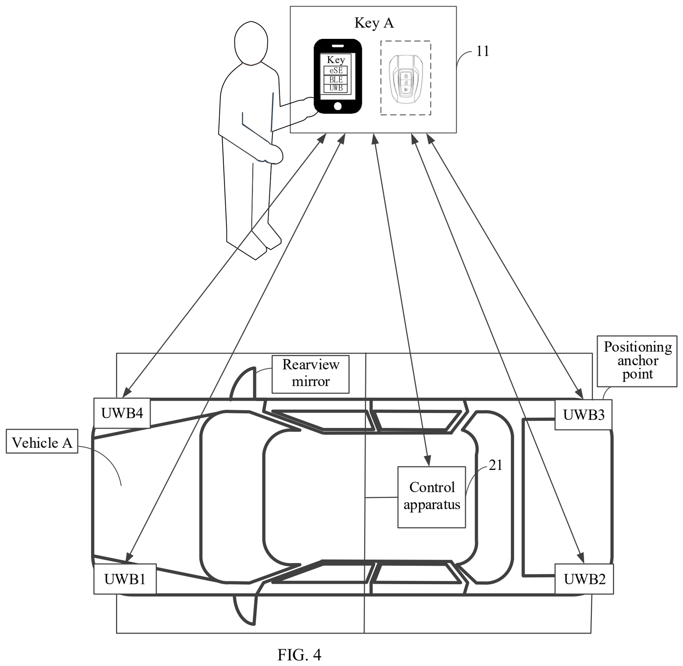

The vehicle key positioning method provided in the present application is described below with reference to FIG. 4, which illustrates a scenario of a user opening a vehicle rearview mirror using senseless control.

Assume that a rearview mirror of vehicle A is in a closed state. The positioning anchor point on vehicle A is a UWB anchor point. The positioning anchor points of vehicle A include two UWB anchor points UWB 1 and UWB4 located at two corners of a front portion of vehicle A, and two UWB anchor points UWB2 and UWB3 located at two corners of a rear portion of vehicle A, as shown in FIG. 4. A UWB apparatus is deployed at the UWB anchor point. The UWB apparatus includes a UWB chip or a UWB module. Key A includes a UWB chip or a UWB module. Key A also includes a BLE module. A control apparatus 21 similar to or identical to the embodiment of FIG. 2 is deployed on vehicle A.

As shown in FIG. 4, a process of a user opening a vehicle rearview mirror using senseless control is shown in the following steps (1) to (3).

(1) If key A of user A detects and identifies that an RSSI of a BLE broadcast signal of vehicle A reaches a preset communication threshold, key A sends a communication connection request to the control apparatus 21 of vehicle A. The control apparatus 21 responds to the communication connection request sent by key A, and establishes communication with key A after successful authentication, so as to complete a communication connection between vehicle A and key A. The control apparatus 21 continuously measures a distance from key A based on the BLE ranging signal between the control apparatus 21 and key A, and obtains a Bluetooth ranging distance of key A relative to the vehicle. If the Bluetooth ranging distance is less than or equal to a first distance threshold, the control apparatus 21 controls the UWB apparatuses at a plurality of positioning anchor points of vehicle A to start a ranging function of each UWB apparatus. The control apparatus 21 converts a Bluetooth ranging mode used for ranging by the control apparatus 21 into a UWB ranging mode used for ranging by the UWB apparatus. The ranging signal between the UWB apparatus and key A is a ranging signal between a positioning anchor point corresponding to the UWB apparatus and key A.

(2) After the control apparatus 21 converts the Bluetooth ranging mode into the UWB ranging mode, the control apparatus 21 positions key A in the manner shown in the following steps (2.1)-(2.8).

(2.1) The control apparatus 21 determines respective distances between UWB1, UWB2, UWB3, UWB4 and key *A*, based on respective ranging signals between the plurality of positioning anchor points of the vehicle and key *A*. The respective distances between UWB1, UWB2, UWB3, UWB4 and key *A* are such as a distance *d1* between key *A* and UWB1, a distance *d2* between key *A* and UWB2, a distance *d3* between key *A* and UWB3, and a distance *d4* between key *A* and UWB4.

(2.2) The control apparatus 21 also obtains respective RSSIs corresponding to UWB1, UWB2, UWB3, and UWB4 from key *A*, and obtains state identifiers of corresponding positioning anchor points from UWB apparatuses respectively corresponding to UWB1, UWB2, UWB3, and UWB4. Assume that the RSSIs corresponding to UWB1, UWB2, UWB3, and UWB4 are RSSI-1, RSSI-2, RSSI-3, and RSSI-4 respectively; all the state identifiers of UWB1, UWB2, UWB3, and UWB4 are valid identifiers.

(2.3) Among the respective distances *d1, d2, d3, d4* between UWB1, UWB2, UWB3, UWB4 and key *A*, if RSSI-1, RSSI-2, RSSI-3, RSSI-4 corresponding to *d1, d2, d3, d4* are all greater than the RSSI of a signal strength threshold, and all the state identifiers of the positioning anchor points corresponding to *d1, d2, d3, d4* are valid identifiers, the control apparatus 21 determines that *d1, d2, d3, d4* are valid distances.

(2.4) The control apparatus 21 sorts *d1, d2, d3,* and *d4* in ascending order to obtain a distance sequence [*d3, d4, d2, d1*].

(2.5) Assume that *n* = 2. The control apparatus 21 determines the positioning anchor points (i.e., UWB3 and UWB4) corresponding to the first two distances (i.e., *d3* and *d4*) in the distance sequence [*d3, d4, d2, d1*] as reference anchor points.

(2.6) The control apparatus 21 determines two reference anchor points UWB3 and UWB4 as target reference anchor points from the determined reference anchor points UWB3 and UWB4.

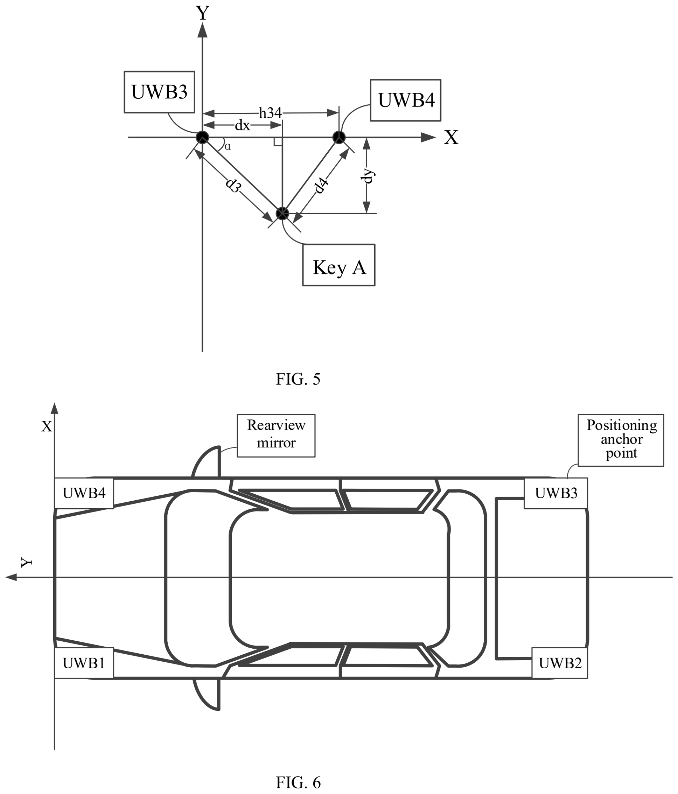

(2.7) The control apparatus 21 determines the local coordinate system shown in FIG. 5 with a line connecting the target reference anchor points UWB3 and UWB4 as the X-axis and the positioning anchor point UWB3 as a coordinate origin. The local coordinate system is the local coordinate system corresponding to the reference anchor points UWB3 and UWB4. In the local coordinate system, the Y-axis coordinate value of key *A* is a negative number. Based on the respective distances *d3* and *d4* between the target reference anchor points UWB3 and UWB4 and key *A,* and a distance $h_{34}$ between the target reference anchor points UWB3 and UWB4, the control apparatus 21 determines the first coordinate ($x_{lA}, y_{lA}$) of key *A* in the local coordinate system shown in FIG. 5 as follows.

As shown in FIG. 5, a vertical distance from key *A* to the X-axis is *dy,* and a vertical distance from key *A* to the Y-axis is *dx.* Then the first coordinate of key *A* in the local coordinate system shown in FIG. 5 is ($x_{lA}, y_{lA}$)=(dx, -dy).

*dx* and *dy* are determined as follows: the control apparatus 21 determines $\cos \alpha = \frac{(d_3)^2 + (h_{34})^2 - (d_4)^2}{2 \times d_3 \times h_{34}}$, according to the cosine theorem $(d_4)^2 = (d_3)^2 + (h_{34})^2 - 2 \times d_3 \times h_{34} \times \cos \alpha$, and further determines: $d_x = d_3 \times \cos \alpha$; $d_y = d_3 \times \sin\alpha$.

(2.8) The control apparatus 21 performs a coordinate system transformation processing on the first coordinate ($x_{lA}, y_{lA}$) of key *A* in the manner shown in steps (2.8.1)-(2.8.3) to obtain a second coordinate ($x_{gA}, y_{gA}$) of key *A* in the preset coordinate system of vehicle *A*.

Assume that a preset coordinate system of vehicle *A* is shown in FIG. 6. The preset coordinate system of vehicle *A* takes a forward direction of a centerline of the vehicle body as a positive direction of the Y axis, a right direction of a driver as a positive direction of the X axis, and an intersection of the X axis and the Y axis is located at a forefront end of a front portion of the vehicle along the central axis. The global coordinates of the four positioning anchor points UWB1, UWB2, UWB3, and UWB4 of vehicle *A* in the preset coordinate system of vehicle *A* are ($x_{01}, y_{02}$), ($x_{02}, y_{02}$), ($x_{03}, y_{03}$), and ($x_{04}, y_{04}$). The coordinate transformation coefficients corresponding to the four positioning anchor points UWB1, UWB2, UWB3, and UWB4 of vehicle A are $\theta_1, \theta_2, \theta_3,$ and $\theta_4$, respectively. Assuming that UWB1, UWB2, UWB3, and UWB4 are the coordinate origins respectively, the local coordinate system is determined by a similar method to step (4). The values of $\theta_1, \theta_2, \theta_3,$ and $\theta_4$ can be determined based on 270°, 0°, 90°, and 180°, and further corrected for correcting an angle deviation of a specific anchor point layout.

(2.8.1) The control apparatus 21 determines that a coordinate transformation coefficient corresponding to a coordinate origin (i.e., the positioning anchor point UWB3) of the local coordinate system to which the first coordinate ($x_{lA}, y_{lA}$) of key *A* belongs is $\theta_3$.

(2.8.2) The control apparatus 21 uses a transformation matrix $\begin{bmatrix} x_{rA} \\ y_{rA} \end{bmatrix} = \begin{bmatrix} cos\theta_3 & -sin\theta_3 \\ sin\theta_3 & cos\theta_3 \end{bmatrix} \begin{bmatrix} x_{lA} \\ y_{lA} \end{bmatrix}$ to transform the first coordinate ($x_{lA}, y_{lA}$) of key *A* into a rotation coordinate ($x_{rA}, y_{rA}$).

(2.8.3) The control apparatus 21 determines the second coordinate ($x_{gA}, y_{gA}$) of key *A* in the preset coordinate system of vehicle *A* shown in FIG. 6, based on the global coordinate ( $x_{03}, y_{03}$ ) corresponding to the coordinate origin of the local coordinate system (i.e., the positioning anchor point UWB3) in the preset coordinate system of vehicle *A*, using the formulas $x_{gA}=x_{rA}+x_{03}$ and $y_{gA}=y_{rA}+y_{03}$.

(3) Assume that multiple function areas $s_i$ of vehicle A are function areas determined based on the preset coordinate system as shown in FIG. 6, and a coordinate point range of the function area $s_i$ is defined as follows: the coordinate point $(x_{s_i}, y_{s_i})$ in the function area $s_i$ satisfies $\beta_{s_{i1}} \leq x_{s_i} \leq \beta_{s_{i2}}$ and $\beta_{s_{i3}} \leq y_{s_i} \leq \beta_{s_{i4}}$, where $i = 1,2,3, ..., k$.

If the preset operation of function area $s_5$ of vehicle A is to open the rearview mirror.

The control apparatus 21 traverses coordinate point ranges of each function area $s_i$. If it is determined that the second coordinate $(x_{gA}, y_{gA})$ of key A is within the coordinate point range of function area $s_5$, that is, $(x_{gA}, y_{gA})$ satisfies $\beta_{s_{51}} \leq x_{gA} \leq \beta_{s_{52}}$ and $\beta_{s_{53}} \leq y_{gA} \leq \beta_{s_{54}}$, then the control apparatus 21 determines that key A is in function area $s_5$ of vehicle A, then the control apparatus 21 executes the operation of opening the rearview mirror of vehicle A, as shown in FIG. 4; if the control apparatus 21 determines that the second coordinate $(x_{gA}, y_{gA})$ of key A is not within a coordinate point range of any function area $s_i$ of vehicle A, then the preset operation corresponding to the function area $s_i$ will not be executed.

In the vehicle key positioning method provided by the present embodiment, a valid distance is determined from respective distances between the plurality of positioning anchor points and the key through respective RSSIs and/or state identifiers of the positioning anchor points of the vehicle, and determines at least two reference anchor points based on the valid distance, thereby improving the accuracy of determining the reference anchor point and ensuring the validity of the determined reference anchor point. The reference anchor point indicates that a ranging signal transmission mode between the positioning anchor points and the key is LOS transmission; based on respective distances between the target reference anchor points determined from the at least two reference anchor points and the key, a first coordinate of the key in a local coordinate system corresponding to the determined reference anchor points is accurately determined; the first coordinate is subjected to a coordinate system transformation processing, and a second coordinate of the key in a preset coordinate system of the vehicle is accurately determined, thereby accurately determining whether the key is in a function area of the vehicle. If it is determined that the key is in a function area of the vehicle, a preset operation corresponding to the function area where the key is located is executed, so that the user can control the vehicle in a senseless manner; if it is determined that the key is not in a function area of the vehicle, a preset operation corresponding to the function area will not be executed. The method of the present application accurately positions the key based on a distance between the positioning anchor point and the key, which is determined by a ranging signal transmitted by LOS, avoiding the inaccurate distance information determined by a ranging signal of NLOS transmission, which has an adverse effect on the positioning accuracy of the key, improving the positioning accuracy of the key, and solving the problem of inaccurate positioning in the key positioning method in the prior art. The method of the present application can avoid a situation where the key position calculated by the existing key positioning method for the vehicle is inconsistent with an actual position of the key, which results in a triggering of a preset operation of a function area that does not match the actual position; or avoid a situation where the key is located in a function area of the vehicle, but a preset operation of the function area where the key is located cannot be executed. The method provided by the present application improves the user experience of the vehicle.

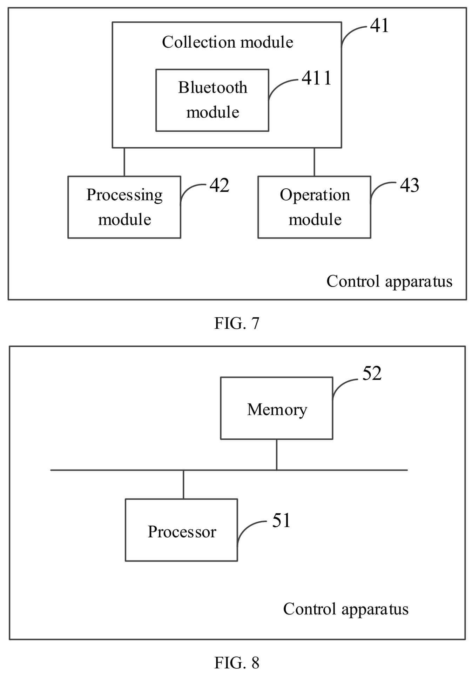

The embodiment of the present application also provides a control apparatus. FIG. 7 is a first structural diagram of a control apparatus provided by an embodiment of the present application. As shown in FIG. 7, the apparatus includes a collection module 41, a processing module 42 and an operation module 43.

The collection module 41 is configured to determine respective distances between a plurality of positioning anchor points and a key of a vehicle based on respective ranging signals between the plurality of positioning anchor points and the key after the vehicle completes a communication connection with the key.

The processing module 42 is configured to determine at least two reference anchor points from the plurality of positioning anchor points based on the respective distances between the plurality of positioning anchor points and the key; where the reference anchor point indicates that a ranging signal transmission mode between the reference anchor point and the key is line-of-sight wireless transmission LOS.

The processing module 42 is further configured to determine a first coordinate of the key in a local coordinate system corresponding to the determined reference anchor points based on respective distances between the determined reference anchor points and the key.

The processing module 42 is further configured to perform a coordinate system transformation processing on the first coordinate to obtain a second coordinate of the key in a preset coordinate system of the vehicle.

The operation module 43 is configured to execute a preset operation corresponding to a function area of the vehicle if it is determined that the key is in the function area according to the second coordinate.

Optionally, the collection module 41 further includes a Bluetooth (BLE) module 411. The Bluetooth module 411 is configured to broadcast a BLE broadcast signal and also configured to conduct a Bluetooth ranging for the key.

The specific implementation principle and technical effect of the control apparatus provided by the embodiment of the present application are similar to the specific implementation principle and technical effect of the embodiment shown in FIG. 3, which will not be repeated here.

The embodiment of the present application also provides a control apparatus. FIG. 8 is a second structural diagram of a control apparatus provided by an embodiment of the present application. As shown in FIG. 8, the control apparatus includes a processor 51 and a memory 52, and the memory 52 stores executable instructions of the processor 51, so that the processor 51 can be used to execute the technical solution of the above-mentioned method embodiments, and the implementation principle and technical effect thereof are similar, which will not be repeated here. It should be understood that the above-mentioned processor 51 can be a central processing unit (Central Processing Unit, referred to as: CPU), or other general-purpose processors, digital signal processors (Digital Signal Processor, referred to as: DSP), application-specific integrated circuits (Application Specific Integrated Circuit, referred to as: ASIC), etc. The general-purpose processor can be a microprocessor or the processor can also be any conventional processor, etc. The steps of the method disclosed in the present invention can be directly embodied as being executed by a hardware processor, or executed by a combination of hardware and software modules in the processor. The memory 52 may include a high-speed random access memory (Random Access Memory, referred to as: RAM), and may also include a non-volatile memory (Non-volatile memory, referred to as: NVM), such as at least one disk memory, and may also be a USB flash drive, a mobile hard disk, a read-only memory, a magnetic disk or an optical disk, etc.

The embodiment of the present application also provides a storage medium, in which computer-executable instructions are stored. When these computer-executable instructions are executed by a processor, the above-mentioned vehicle key positioning method is implemented. The storage medium can be implemented by any type of volatile or non-volatile storage device or a combination thereof, such as static random access memory (Static Random-Access Memory, referred to as: SRAM), electrically erasable programmable read-only memory (Electrically-Erasable Programmable Read-Only Memory, referred to as: EEPROM), erasable programmable read-only memory (Erasable Programmable Read-Only Memory, referred to as: EPROM), programmable read-only memory (Programmable Read-Only Memory, referred to as: PROM), read-only memory (Read-Only Memory, referred to as: ROM), magnetic memory, flash memory, magnetic disk or optical disk. The storage medium can be any available medium that can be accessed by a general or special-purpose computer.

An exemplary storage medium is coupled to a processor so that the processor can read information from the storage medium and write information to the storage medium. Of course, the storage medium can also be a component of the processor. The processor and the storage medium can be located in an application specific integrated circuit (Application Specific Integrated Circuits, referred to as: ASIC). Of course, the processor and the storage medium can also exist as discrete components in an electronic device or a main control apparatus.

An embodiment of the present application also provides a program product, such as a computer program, which, when executed by a processor, implements the vehicle key positioning method covered by the present application.

This embodiment also provides a chip, which includes a memory and a processor. The memory stores codes and data. The memory is coupled to the processor. The processor runs the program in the memory so that the chip is used to execute the vehicle key positioning method provided by the above various embodiments.

This embodiment also provides a computer program, which, when executed by a processor, is used to execute the vehicle key positioning method provided in the aforementioned various embodiments.

Those skilled in the art can understand that all or part of the steps of implementing the above-mentioned method embodiments can be completed by hardware related to program instructions. The aforementioned program can be stored in a computer-readable storage medium. When the program is executed, the steps of the above-mentioned method embodiments are executed; and the aforementioned storage medium includes: ROM, RAM, magnetic disk or optical disk and other media that can store program codes.

Finally, it should be noted that the above implementations are only used to illustrate the technical solutions of the present invention, rather than to limit it. Although the present invention has been described in detail with reference to the aforementioned implementations, those skilled in the art should understand that they can still modify the technical solutions described in the aforementioned implementations, or replace some or all of the technical features therein with equivalents. However, these modifications or replacements do not cause the essence of the corresponding technical solutions to deviate from the scope of the technical solutions of the implementations of the present invention.

**Claims**

1.    A vehicle key positioning method, comprising:

after a vehicle completes a communication connection with a key of the vehicle, determining respective distances between a plurality of positioning anchor points of the vehicle and the key based on respective ranging signals between the plurality of positioning anchor points and the key;
determining at least two reference anchor points from the plurality of positioning anchor points, based on the respective distances between the plurality of positioning anchor points and the key; wherein a reference anchor point indicates that a ranging signal transmission mode between the reference anchor point and the key is line-of-sight wireless transmission LOS;
determining a first coordinate of the key in a local coordinate system corresponding to the determined reference anchor points, based on respective distances between the determined reference anchor points and the key;
performing a coordinate system transformation processing on the first coordinate to obtain a second coordinate of the key in a preset coordinate system of the vehicle;
if it is determined according to the second coordinate that the key is in a function area of the vehicle, executing a preset operation corresponding to the function area.

2. The method according to claim 1, wherein the determining the first coordinate of the key in the local coordinate system corresponding to the determined reference anchor points, based on the respective distances between the determined reference anchor points and the key comprises:

determining, from the determined reference anchor points, two reference anchor points as target reference anchor points;
determining the local coordinate system with a line connecting the two target reference anchor points as an X-axis and one target reference anchor point on the X-axis as a coordinate origin;
determining, based on respective distances between the two target reference anchor points and the key, and a distance between the two target reference anchor points, the first coordinate of the key in the local coordinate system.

3. The method according to claim 2, wherein the determining, from the determined reference anchor points, two reference anchor points as the target reference anchor points comprises:

if a number of the determined reference anchor points exceeds two and the determined reference anchor points are collinear, determining two reference anchor points with a largest distance therebetween as the target reference anchor points;
if the number of the determined reference anchor points exceeds two and the determined reference anchor points are not collinear, determining two adjacent reference anchor points, for which a line connecting them is parallel to a ground surface, as the target reference anchor points.

4. The method according to any one of claims 1 to 3, wherein the performing the coordinate system transformation processing on the first coordinate to obtain the second coordinate of the key in the preset coordinate system of the vehicle comprises:

determining a coordinate transformation coefficient $\theta$ corresponding to the coordinate origin of the local coordinate system to which the first coordinate $(x_l, y_l)$ belongs;
transforming the first coordinate $(x_l, y_l)$ into a rotation coordinate $(x_r, y_r)$ using a transformation matrix $\begin{bmatrix} x_r \\ y_r \end{bmatrix} = \begin{bmatrix} cos\theta & -sin\theta \\ sin\theta & cos\theta \end{bmatrix} \begin{bmatrix} x_l \\ y_l \end{bmatrix}$;
determining a second coordinate $(x_g, y_g)$ of the key in the preset coordinate system of the vehicle, based on a global coordinate $(x_0, y_0)$ of a positioning anchor point, to which the coordinate origin in the local coordinate system corresponds, in the preset coordinate system of the vehicle, using formulas $x_g = x_r + x_0$ and $y_g = y_r + y_0$.

5. The method according to any one of claims 1 to 4, wherein the positioning anchor points are positioning anchor points located outside a vehicle body;
then, the determining the at least two reference anchor points from the plurality of positioning anchor points based on the respective distances between the plurality of positioning anchor points and the key comprises:

sorting the respective distances between the plurality of positioning anchor points and the key in ascending order to obtain a distance sequence;
determining positioning anchor points corresponding to first $n$ distances in the distance sequence as the reference anchor points;
wherein, $n \geq 2$.

6. The method according to any one of claims 1 to 4, wherein the determining the at least two reference anchor points from the plurality of positioning anchor points based on the respective distances between the plurality of positioning anchor points and the key comprises:

obtaining respective received signal strength indications RSSIs corresponding to the plurality of positioning anchor points from the key; and/or obtaining respective state identifiers of corresponding positioning anchor points from positioning apparatuses of the plurality of positioning anchor points; wherein a state identifier is an identifier indicating whether a ranging signal used for ranging between the positioning anchor point and the key is valid;
determining a distance corresponding to an RSSI greater than a signal strength threshold as a valid distance from the respective distances between the plurality of positioning anchor points and the key; and/or determining a distance between a positioning anchor point corresponding to a valid identifier and the key as a valid distance from the state identifiers of the plurality of positioning anchor points obtained; determining the at least two reference anchor points from the plurality of positioning anchor points, based on the determined valid distance.

7. The method according to any one of claims 1 to 6, wherein before the determining the at least two reference anchor points from the plurality of positioning anchor points based on the determined valid distance, the method further comprises:
if a number of the determined valid distance is less than two, re-acquiring respective ranging signals between the plurality of positioning anchor points of the vehicle and the key, and determining respective distances between the plurality of positioning anchor points and the key based on the acquired ranging signals, until that at least two valid distances are determined from the respective distances between the plurality of positioning anchor points and the key.

8. A control apparatus, comprising: a collection module, a processing module and an operation module; wherein

the collection module is configured to after a vehicle completes a communication connection with a key of the vehicle, determine respective distances between a plurality of positioning anchor points of the vehicle and the key, based on respective ranging signals between the plurality of positioning anchor points and the key;
the processing module is configured to determine at least two reference anchor points from the plurality of positioning anchor points, based on the respective distances between the plurality of positioning anchor points and the key; wherein a reference anchor point indicates that a ranging signal transmission mode between the reference anchor point and the key is line-of-sight wireless transmission LOS;
the processing module is further configured to determine a first coordinate of the key in a local coordinate system corresponding to the determined reference anchor points, based on respective distances between the determined reference anchor points and the key;
the processing module is further configured to perform a coordinate system transformation processing on the first coordinate to obtain a second coordinate of the key in a preset coordinate system of the vehicle;
the operation module is configured to execute a preset operation corresponding to a function area of the vehicle if it is determined that the key is in the function area according to the second coordinate.

9. A control apparatus, comprising:

a processor and a memory;
wherein the memory stores executable instructions executable by the processor; and
the processor executes the executable instructions stored in the memory, so that the processor executes the method according to any one of claims 1 to 7.

10. A storage medium, wherein the storage medium stores computer-executable instructions, and the computer-executable instructions, when executed by a processor, are used to implement the method according to any one of claims 1 to 7.

11. A chip, comprising: a memory and a processor; wherein the memory stores codes and data, the memory is coupled to the processor, and the processor runs a program in the memory so that the chip is used to execute the method according to any one of claims 1 to 7.

12. A program product, comprising a computer program, which, when run on a computer, causes the computer to execute the method according to any one of claims 1 to 7.

13. A computer program, wherein the computer program, when executed by a processor, is used to execute the method according to any one of claims 1 to 7.

FIG. 1a

Scenario 1

Scenario 2

Scenario 3

FIG. 1b

Key

Key
eSE
BLE
UWB

11

Positioning
anchor point

UWB4

UWB3

Vehicle

Control
apparatus

21

UWB1

UWB2

FIG. 2

After a vehicle completes a communication connection with a key of the vehicle, determining respective distances between a plurality of positioning anchor points of the vehicle and the key based on respective ranging signals between the plurality of positioning anchor points and the key — S101

Determining at least two reference anchor points from the plurality of positioning anchor points based on the respective distances between the plurality of positioning anchor points and the key; where the reference anchor point indicates that a ranging signal transmission mode between the reference anchor point and the key is line-of-sight wireless transmission LOS — S102

Determining a first coordinate of the key in a local coordinate system corresponding to the determined reference anchor points, based on the respective distances between the determined reference anchor points and the key — S103

Performing a coordinate system transformation processing on the first coordinate to obtain a second coordinate of the key in a preset coordinate system of the vehicle — S104

If it is determined according to the second coordinate that the key is in a function area of the vehicle, executing a preset operation corresponding to the function area — S105

FIG. 3

FIG. 4

FIG. 5

FIG. 6

Collection module — 41

Bluetooth module — 411

Processing module — 42

Operation module — 43

Control apparatus

FIG. 7

Memory — 52

Processor — 51

Control apparatus

FIG. 8

# INTERNATIONAL SEARCH REPORT

| | International application No. |
|---|---|
| | **PCT/CN2024/097652** |

| A. | CLASSIFICATION OF SUBJECT MATTER |
|---|---|

H04W4/02(2018.01)i; H04W4/021(2018.01)i; H04W4/40(2018.01)i; H04W64/00(2009.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT: VEN: ENTXTC; CNKI: 车, 钥匙, 定位, 距离, 测距, 视距, 视线, 无遮挡, 标签, 锚点, 锚定, 设备, 坐标系, 转换, 变换, 精度, 精确, vehicle, car, key, locate, distance, measure, LOS, line of sight, NLOS, tag, anchor, device, coordinate, transform, convert, precise, accurate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116896721 A (ZHEJIANG GEELY HOLDING GROUP CO., LTD. et al.) 17 October 2023 (2023-10-17) claims 1-10, description, paragraphs [0001]-[0154], and figures 1a-8 | 1-13 |
| Y | CN 115767723 A (ATECH AUTOMOTIVE WUHU CO., LTD.) 07 March 2023 (2023-03-07) description, paragraphs [0001]-[0045], and figures 1-4 | 1-13 |
| Y | CN 112425221 A (NOKIA SHANGHAI BELL CO., LTD. et al.) 26 February 2021 (2021-02-26) description, paragraphs [0001]-[0127], and figures 1-11 | 1-13 |
| A | CN 114415108 A (NANJING SILERGY MICRO TECHNOLOGY CO., LTD.) 29 April 2022 (2022-04-29) entire document | 1-13 |
| A | US 2019394748 A1 (NXP B. V.) 26 December 2019 (2019-12-26) entire document | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 July 2024** | **05 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/097652**

| Patent document cited in search report | | | Publication date (day/month/year) | Patent family member(s) | | | Publication date (day/month/year) |
|---|---|---|---|---|---|---|---|
| CN | 116896721 | A | 17 October 2023 | None | | | |
| CN | 115767723 | A | 07 March 2023 | None | | | |
| CN | 112425221 | A | 26 February 2021 | None | | | |
| CN | 114415108 | A | 29 April 2022 | None | | | |
| US | 2019394748 | A1 | 26 December 2019 | US | 10631265 | B2 | 21 April 2020 |

Form PCT/ISA/210 (patent family annex) (July 2022)

**EP 4 654 622 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310723293